# FASCICULE DE BREVET EUROPEEN

(11) **EP 1 857 697 B1**
(45) Date de publication et mention de la délivrance du brevet: **03.12.2008**
(21) Numéro de dépôt: 07290392.5
(22) Date de dépôt: 30.03.2007
(51) Int. Cl.: F16D 11/12, B64D 11/06, B60N 2/02

(54) **Ensemble de liaison entre un système mécanique et un actionneur de réglage comprenant des organes de crabotage/décrabotage**
Kupplungsanordnung zwischen einem mechanischen System und einem Regulierstellglied, das Kupplungs- und Endkupplungsorgane umfasst
Coupling assembly between a mechanical system and an adjustment actuator comprising clutch/release means

(30) Priorité: 19.05.2006 FR 0604526
(43) Date de publication de la demande: 21.11.2007
(73) Titulaire: Société Industrielle et Commerciale de Matériel Aéronautique, F-36100 Issoudun (FR)
(72) Inventeur: Barroca, Marcel, 36100 Brives (FR)
(74) Mandataire: Bredema

(56) Documents cités:
- FR-A1- 2 748 240
- US-A- 4 930 841
- US-A1- 2003 075 964
- US-A1- 2006 011 005

## Description

La présente invention concerne un ensemble de liaison entre un système mécanique, tel qu'un siège d'aéronef, et un actionneur de réglage, ainsi qu'un aéronef comprenant un tel ensemble de liaison.

Un ensemble de liaison selon le préambule de la revendication 1 est connu de US 2006/011005 A1.

Les actionneurs de réglage sont prévus pour régler la position du siège. L'ensemble de liaison entre le siège et l'actionneur comporte généralement un arbre d'entrée relié à une sortie dudit actionneur et un arbre de sortie reliée à une entrée dudit système mécanique, les arbres coopérant entre eux pour transmettre le mouvement de l'actionneur au siège.

Des moyens de décrabotage sont généralement associés à l'actionneur de réglage afin de permettre de supprimer la coopération entre l'arbre d'entrée et l'arbre de sortie, notamment pour effectuer des opérations de maintenance sur le siège.

Il est connu d'avoir en outre des moyens de recopie de la position du siège lorsque cette position est changée et que l'on souhaite remettre ce siège dans une position préréglée.

Cependant, lorsque le siège est dissocié de l'actionneur grâce aux moyens de décrabotage, la fonction de recopie de la position du siège est perdue et de nouveaux réglages sont nécessaires.

L'invention vise à pallier cet inconvénient en proposant un ensemble de liaison entre un système mécanique, tel qu'un siège d'aéronef, et un actionneur de réglage comprenant des organes de crabotage/décrabotage et des moyens de recopie de position dans lequel la fonction de recopie n'est pas perdue lorsque l'ensemble de liaison a été décraboté.

A cet effet et selon un premier aspect, l'invention concerne un ensemble de liaison entre un système mécanique, tel qu'un siège d'aéronef, et un actionneur de réglage, comportant un arbre d'entrée relié à une sortie dudit actionneur et un arbre de sortie relié à une entrée dudit système mécanique, et des organes de crabotage/décrabotage disposés entre l'arbre d'entrée et l'arbre de sortie, lesdits organes étant mobiles entre une position verrouillée, dans laquelle l'arbre d'entrée et l'arbre de sortie coopèrent en rotation, et une position déverrouillée, dans laquelle l'arbre d'entrée ne coopère pas avec l'arbre de sortie, des moyens de recopie de position étant montés solidaires dudit actionneur, lesdits moyens de recopie possédant un arbre d'entrée, une tige de recopie de position étant fixée entre ledit arbre de sortie et l'arbre d'entrée desdits moyens de recopie.

Les organes de crabotage/décrabotage n'étant pas intégrés à l'actionneur, on peut prévoir une liaison directe entre les moyens de recopie de position et l'arbre de sortie du système mécanique, ce qui permet de conserver la fonction de recopie de la position du système mécanique après le décrabotage de l'ensemble de liaison.

Selon une réalisation, lesdits arbres d'entrée et de sortie dudit ensemble sont sensiblement coaxiaux, l'arbre d'entrée étant inséré dans un premier alésage axial de l'arbre de sortie, ledit arbre d'entrée de l'ensemble comportant un deuxième alésage axial, et ladite tige de recopie de position traversant ledit deuxième alésage axial.

Selon une réalisation, lesdits organes de crabotage/décrabotage comprennent au moins un logement prévu dans l'arbre d'entrée de l'ensemble et au moins un orifice traversant l'arbre de sortie, l'orifice étant disposé en regard du logement, au moins un organe de verrouillage étant mobile en translation radiale entre une position de verrouillage, dans laquelle ledit organe est disposé dans le logement et l'orifice de sorte à solidariser l'arbre d'entrée et l'arbre de sortie, et une position de déverrouillage, dans laquelle ledit organe est sorti du logement de sorte à désolidariser l'arbre d'entrée et l'arbre de sortie.

Selon un deuxième aspect, l'invention concerne un aéronef, comprenant au moins un ensemble tel que décrit ci-dessus, associé à au moins un siège dudit aéronef.

D'autres aspects et avantages de l'invention au cours de la description détaillée qui suit, faite en référence aux figures annexées.

La figure 1 est une représentation schématique partielle en coupe d'un ensemble de liaison selon l'invention, le système de crabotage/décrabotage étant en position verrouillée.

La figure 2 est une représentation schématique partielle en coupe de l'ensemble de la figure 1, le système de crabotage/décrabotage étant en position déverrouillée.

En référence aux figures, on décrit un ensemble de liaison 1 entre système mécanique (non représenté), tel qu'un siège d'aéronef, et un actionneur de réglage (non représenté).

L'ensemble de liaison 1 comprend un arbre d'entrée 2 relié à une sortie dudit actionneur et un arbre de sortie 3 relié à une entrée dudit système mécanique. En fonctionnement normal de l'ensemble, l'arbre d'entrée 2 et l'arbre de sortie 3 coopèrent en rotation de sorte à transmettre un mouvement de rotation de l'actionneur au système mécanique. A cet effet, les arbres d'entrée 2 et de sortie 3 sont sensiblement coaxiaux et l'arbre de sortie 3 comprend un premier alésage axial 4 dans lequel l'arbre d'entrée 2 est inséré.

Des organes de crabotage/décrabotage sont prévus entre l'arbre d'entrée 2 et l'arbre de sortie 3. Ces organes sont mobiles entre une position verrouillée, dans laquelle l'arbre d'entrée 2 et l'arbre de sortie 3 coopèrent en rotation, et une position déverrouillée, dans laquelle l'arbre d'entrée 2 ne coopère pas avec l'arbre de sortie 3 de sorte à pouvoir désolidariser l'arbre de sortie 3 de l'actionneur afin de pouvoir, par exemple, effectuer des opérations de maintenance sur le système mécanique.

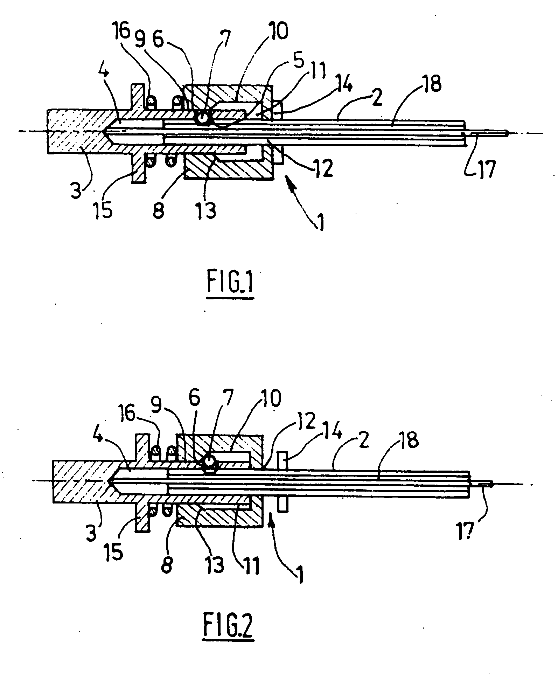

Les organes de crabotage/décrabotage comprennent au moins un logement 5 prévu dans l'arbre d'entrée 2 de l'ensemble de liaison et au moins un orifice 6 traversant l'arbre de sortie 3. Un organe de verrouillage 7 est mobile en translation radiale entre une position de verrouillage (figure 1), dans laquelle l'orifice 6 est disposé en regard du logement 5 et dans laquelle l'organe 7 est disposé dans le logement 5 et l'orifice 6 de sorte à solidariser l'arbre d'entrée 2 et l'arbre de sortie 3, et une position de déverrouillage (figure 2), dans laquelle l'organe 7 est sorti du logement 5 de sorte à désolidariser l'arbre d'entrée 2 et l'arbre de sortie 3. L'organe de verrouillage 7 est par exemple constitué d'une bille. Selon différentes réalisations, on peut prévoir une pluralité d'organes de verrouillage 7, disposés chacun dans des logements et orifices correspondants.

Les organes de crabotage/décrabotages comprennent en outre une bague de commande 8 disposée autour de l'arbre d'entrée 2 et de l'arbre de sortie 3. La bague de commande 8 comprend une portion de paroi interne de verrouillage 9 de diamètre sensiblement égal à celui de l'arbre de sortie 3 et une portion de paroi interne de déverrouillage 10 de diamètre supérieur à celui de l'arbre de sortie 3. La portion de paroi interne de déverrouillage 10 forme ainsi un logement 11 s'étendant autour d'une partie de l'arbre de sortie 3. La bague de commande 8 présente un alésage axial 12 dont une partie extrême présente un diamètre sensiblement égal au diamètre de l'arbre de sortie 3 au voisinage de portion de paroi de verrouillage 9 et dont l'autre partie extrême présente un diamètre sensiblement égal celui de l'arbre d'entrée 2, les bords de l'alésage 12 dans cette partie extrême fermant le logement 11. L'arbre d'entrée 2 est inséré dans la bague 8 du côté du logement 11 et l'arbre de sortie 3 est inséré dans la bague 8 du côté de la portion de paroi de verrouillage 9.

La bague de commande 8 est mobile en translation axiale entre une position de verrouillage (figure 1), dans laquelle la portion de paroi interne de verrouillage 9 est disposée en regard de l'orifice 6 de sorte à retenir l'organe de verrouillage 7 dans le logement 5, et une position de déverrouillage (figure 2), dans laquelle la portion de paroi interne de déverrouillage 10 est disposée en regard de l'orifice 6 de sorte à permettre la sortie de l'organe de verrouillage 7 du logement 5 vers le logement 11. La sortie de l'organe de verrouillage 7 se fait par rotation de l'arbre d'entrée 2 lorsque la bague de commande 8 est en position de déverrouillage.

La bague de commande 8 comprend en outre une pente 13 reliant la portion de paroi interne de verrouillage 9 à la portion de paroi interne de déverrouillage 10. La pente 13 permet de ramener l'organe de verrouillage 7 dans sa position de verrouillage en faisant passer la bague de commande 8 de sa position de déverrouillage à sa position de verrouillage et en faisant tourner l'arbre d'entrée 2 de sorte à placer le logement 5 en regard de l'orifice 9.

La bague de commande 8 est montée entre une butée radiale 14 de la paroi externe de l'arbre d'entrée 2 et une butée radiale 15 de la paroi externe de l'arbre de sortie 3, les butées 14 et 15 étant espacées de sorte à permettre le déplacement de la bague de commande 8 entre sa position de verrouillage et sa position de déverrouillage.

Un ressort 16 est monté entre la bague de commande 8 la surface de la butée radiale 15 de l'arbre de sortie 3. Le ressort 16 se comprime lorsque la bague de commande 8 passe dans sa position de déverrouillage (figure 2) et renvoie la bague 8 contre la butée 14 lors du passage en position de verrouillage (figure 1).

Le déplacement de la bague de commande 8 peut être commandé par un système de commande (non représenté) à doigt indexé sur la bague de commande 8, relié à un câble de commande (non représenté).

Le système mécanique est associé à des moyens de recopie de la position du système mécanique. Ces moyens sont par exemple formés de façon classique par un potentiomètre (non représenté) comprenant un arbre d'entrée associé à une tige de recopie de position 17 sensiblement rigide. L'arbre d'entrée des moyens de recopie est sensiblement coaxial aux arbres d'entrée 2 et de sortie 3. La tige de recopie de position 17 est fixée à l'arbre de sortie 3 de l'ensemble de liaison 1. A cet effet, l'arbre d'entrée 2 comprend un deuxième alésage axial 18 que la tige 17 traverse jusqu'à l'arbre de sortie 3, comme représenté sur les figures.

Ainsi, les organes de crabotage/décrabotage n'influent pas sur les moyens de recopie de position et la fonction de recopie de position n'est pas perdue lorsque l'ensemble est décraboté.

L'ensemble de liaison 1, selon l'invention, peut être mis en oeuvre dans un aéronef, au niveau des sièges de celui-ci par exemple.

## Revendications

1. Ensemble de liaison entre un système mécanique, tel qu'un siège d'aéronef, et un actionneur de réglage, comportant un arbre d'entrée (2) relié à une sortie dudit actionneur et un arbre de sortie (3) relié à une entrée dudit système mécanique, et des organes de crabotage/décrabotage disposés entre l'arbre d'entrée (2) et l'arbre de sortie (3), lesdits organes étant mobiles entre une position verrouillée, dans laquelle l'arbre d'entrée (2) et l'arbre de sortie (3) coopèrent en rotation, et une position déverrouillée, dans laquelle l'arbre d'entrée (2) ne coopère pas avec l'arbre de sortie (3), ledit ensemble étant **caractérisé en ce que** des moyens de recopie de position sont montés solidaires dudit actionneur, lesdits moyens de recopie possédant un arbre d'entrée, une tige de recopie de position (17) étant fixée entre ledit arbre de sortie et l'arbre d'entrée desdits moyens de recopie.

2. Ensemble selon la revendication 1, **caractérisé en ce que** lesdits arbres d'entrée (2) et de sortie (3) dudit ensemble sont sensiblement coaxiaux, l'arbre d'entrée (2) étant inséré dans un premier alésage axial (4) de l'arbre de sortie (3), ledit arbre d'entrée de l'ensemble comportant un deuxième alésage axial (18), et ladite tige de recopie de position (17) traversant ledit deuxième alésage axial.

3. Ensemble selon la revendication 2, **caractérisé en ce que** ladite tige de recopie de position est sensiblement rigide, ledit arbre d'entrée des moyens de recopie étant sensiblement coaxial auxdits arbres d'entrée et de sortie dudit ensemble.

4. Ensemble selon l'une quelconque des revendications 1 à 3, **caractérisé en ce que** lesdits organes de crabotage/décrabotage comprennent au moins un logement (5) prévu dans l'arbre d'entrée (2) de l'ensemble et au moins un orifice (6) traversant l'arbre de sortie (3), au moins un organe de verrouillage (7) étant mobile en translation radiale entre une position de verrouillage, dans laquelle l'orifice (6) est disposé en regard du logement (5) et dans laquelle ledit organe est disposé dans le logement (5) et l'orifice (6) de sorte à solidariser l'arbre d'entrée (2) et l'arbre de sortie (3), et une position de déverrouillage, dans laquelle ledit organe est sorti du logement (5) de sorte à désolidariser l'arbre d'entrée (2) et l'arbre de sortie (3).

5. Ensemble selon la revendication 4, **caractérisé en ce que** les organes de crabotage/décrabotage comprennent en outre une bague de commande (8) disposée autour de l'arbre d'entrée (2) et de l'arbre de sortie (3), la bague de commande (8) comprenant une portion de paroi interne de verrouillage (9) de diamètre sensiblement égal à celui de l'arbre de sortie (3) et une portion de paroi interne de déverrouillage (10) de diamètre supérieur à celui de l'arbre de sortie (3), la bague de commande (8) étant mobile en translation axiale entre une position de verrouillage, dans laquelle la portion de paroi interne de verrouillage (9) est disposée en regard de l'orifice (6) de sorte à retenir l'organe de verrouillage (7) dans le logement (5), et une position de déverrouillage, dans laquelle la portion de paroi interne de déverrouillage (10) est disposée en regard de l'orifice (6) de sorte à permettre la sortie de l'organe de verrouillage (7) du logement (5) lors de la rotation de l'arbre d'entrée (2) par rapport à l'arbre de sortie (3).

6. Ensemble selon la revendication 5, **caractérisé en ce que** l'organe de verrouillage (7) est formé par une bille, ladite bille pouvant sortir du logement (5) par rotation de l'arbre d'entrée (2) lorsque la bague de commande (8) est en position de déverrouillage.

7. Ensemble selon la revendication 5 ou 6, **caractérisé en ce que** la bague de commande (8) comprend une pente (13) reliant la portion de paroi interne de verrouillage (9) à la portion de paroi interne de déverrouillage (10), ladite pente étant agencée pour ramener l'organe de verrouillage (7) dans sa position de verrouillage lorsque la bague de commande (8) passe de sa position de déverrouillage à sa position de verrouillage.

8. Ensemble selon l'une quelconque des revendications 5 à 7, **caractérisé en ce qu'**un ressort (16) est disposé entre une surface de butée radiale (15) prévue sur l'arbre de sortie (3) et la bague de commande (8), le ressort (16) étant comprimé lorsque la bague de commande (8) est en position de déverrouillage.

9. Ensemble selon l'une quelconque des revendications 1 à 8, **caractérisé en ce que** les moyens de recopie comprennent un potentiomètre.

10. Aéronef, **caractérisé par le fait qu'**il comprend au moins un ensemble de liaison (1) selon l'une quelconque des revendications 1 à 9 associé à au moins un siège dudit aéronef.

## Claims

1. An assembly for connecting a mechanical system such as an aircraft seat and an adjustment activator, comprising an input shaft (2) connected to an output of said activator and an output shaft (3) connected to an input of said mechanical system, and jaw clutching/declutching members positioned between the input shaft (2) and the output shaft (3), said members being movable between a locked position, wherein the input shaft (2) and the output shaft (3) cooperate in rotation, and an unlocked position, wherein the input shaft (2) does not cooperate with the output shaft (3), said assembly being **characterized in that** position recopy means are mounted integral with said activator, said position recopy means having an input shaft, a position recopy rod (17) being fixed between said output shaft and the input shaft of said recopy means.

2. An assembly according to claim 1, **characterized in that** said input shaft (2) and output shaft (3) of said assembly are substantially coaxial, the input shaft (2) being inserted into a first axial bore (4) of the output shaft (3), said input shaft of the assembly comprising a second axial bore (18), and said position recopy rod (17) going through said second axial bore.

3. An assembly according to claim 2, **characterized in that** said position recopy rod is substantially rigid, said recopy means input shaft being substantially coaxial with said input and output shafts of said assembly.

4. An assembly according to any one of claims 1 to 3, **characterized in that** said jaw clutching/declutching members comprise at least one recess (5) provided in the input shaft (2) of the assembly and at least one hole (6) going through the output shaft (3), at least one locking member (7) being movable in radial translation between a locking position, wherein the hole (6) is positioned opposite the recess (5) and wherein said member is positioned in the recess (5) and the hole (6) so as to make the input shaft (2) and the output shaft (3) integral, and an unlocking position, wherein said member has left the recess (5) so as to separate the input shaft (2) and the output shaft (3).

5. An assembly according to claim 4, **characterized in that** said jaw clutching/declutching members further comprise a control bushing (8) positioned about the input shaft (2) and the output shaft (3), with the control bushing (8) comprising a locking internal wall portion (9) having a diameter substantially equal to that of the output shaft (3) and an unlocking internal wall portion (10) having a diameter greater than that of the output shaft (3), the control bushing (8) being movable in axial translation between a locking position, wherein the locking internal wall portion (9) is positioned opposite the hole (6) so as to hold the locking member (7) in the recess (5), and an unlocking position, wherein the unlocking internal wall portion (10) is positioned opposite the hole (6) so as to enable the locking member (7) to leave the recess (5) during the rotation of the input shaft (2) with respect to the output shaft (3).

6. An assembly according to claim 5, **characterized in that** the locking member (7) is composed of a ball, said ball being able to leave the recess (5) by rotation of the input shaft (2) when the control bushing (8) is in the unlocking position.

7. An assembly according to claim 5 or 6, **characterized in that** the control bushing (8) has a slope (13) connecting the locking internal wall portion (9) to the unlocking internal wall portion (10), said slope being so arranged as to bring back the locking member (7) to the locking position thereof, when the control bushing (8) switches from its unlocking position to its locking position.

8. An assembly according to any one of claims 1 to 7, **characterized in that** a spring (16) is positioned between a radial stopper surface (15) provided on the output shaft (3) and the control bushing (8), the spring (16) being compressed when the control bushing (8) is in the unlocking position.

9. An assembly according to any one of claims 1 to 8, **characterized in that** the recopy means include a potentiometer.

10. An aircraft **characterized in that** it includes at least one connection assembly (1) according to any one of claims 1 to 9, associated with at least one seat of said aircraft.

## Patentansprüche

1. Verbindungssystem zwischen einem mechanischen System, wie zum Beispiel einem Sitz in einem Luftfahrzeug, und einem Regelglied, das eine Eingangswelle (2) umfaßt, die mit einem Ausgang des besagten Wirkglieds verbunden ist, und eine Ausgangswelle (3), die mit einem Eingang des besagten mechanischen Systems verbunden ist, und Kupplungs-/Auskupplungssysteme, die zwischen der Eingangswelle (2) und der Ausgangswelle (3) angeordnet sind, wobei die besagten Organe zwischen einer verriegelten Position, in der die Eingangswelle (2) und die Ausgangswelle (3) in Drehung zusammenwirken, und einer entriegelten Position, in der die Eingangswelle (2) nicht mit der Ausgangswelle (3) zusammenwirkt, beweglich sind, wobei das besagte System **dadurch gekennzeichnet ist, daß** Mittel für die Positionskopie fest mit dem besagten Wirkglied verbunden sind, wobei die besagten Mittel für die Positionskopie eine Eingangswelle besitzen, wobei ein Stab für die Positionskopie (17) zwischen der besagten Ausgangswelle und der Eingangswelle der besagten Mittel für die Positionskopie befestigt ist.

2. System nach Anspruch 1, **dadurch gekennzeichnet, daß** die besagte Eingangswelle (2) und Ausgangswelle (3) des besagten Systems deutlich koaxial verlaufen, wobei die Eingangswelle (2) in eine erste axiale Bohrung (4) der Ausgangswelle (3) eingesetzt ist, wobei die besagte Eingangswelle des Systems eine zweite axiale Bohrung (18) umfaßt und der besagte Stab für die Positionskopie (17) die besagte zweite axiale Bohrung durchquert.

3. System nach Anspruch 2, **dadurch gekennzeichnet, daß** der besagte Stab für die Positionskopie deutlich starr ist, wobei die besagte Eingangswelle der Mittel für die Kopie deutlich koaxial zu der besagten Eingangswelle und Ausgangswelle des besagten Systems steht.

4. System nach einem beliebigen der vorstehenden Ansprüche 1 bis 3, **dadurch gekennzeichnet, daß** die besagten Kupplungs-/Auskupplungsorgane mindestens eine Aufnahme (5) umfassen, die in der Eingangswelle (2) des Systems vorgesehen ist, und mindestens eine Öffnung (6), die die Ausgangswelle (3) durchquert, wobei mindestens ein Verriegelungsorgan (7) in radialer Querbewegung zwischen einer Verriegelungsposition, in der die Öffnung (6) gegenüber der Aufnahme (5) angeordnet ist, und in der das besagte Organ in der Aufnahme (5) und der Öffnung (6) angeordnet ist, damit die Eingangswelle (2) und die Ausgangswelle (3) fest verbunden wird, und einer entriegelten Position, in der das besagte Organ aus der Aufnahme (5) austritt, damit die Eingangswelle (2) und die Ausgangswelle (3) getrennt werden, beweglich ist.

5. System nach Anspruch 4, **dadurch gekennzeichnet, daß** die Kupplungs-/Auskupplungsorgane ferner einen Steuerring (8) umfassen, der um die Eingangswelle (2) und die Ausgangswelle (3) herum angeordnet ist, wobei der Steuerring einen Abschnitt der inneren Verriegelungswand (9) mit deutlich gleichem Durchmesser wie demjenigen der Ausgangswelle (3) umfaßt und einen Abschnitt der inneren Entriegelungswand (10) mit größerem Durchmesser als demjenigen der Ausgangswelle (3), wobei der Steuerring (8) in axialer Translation beweglich ist zwischen einer Verriegelungsposition, in der der Abschnitt der inneren Verriegelungswand (9) gegenüber der Öffnung (6) angeordnet ist, so daß das Verriegelungsorgan (7) in der Aufnahme (5) zurückgehalten wird, und einer Entriegelungsposition, in der der Abschnitt der inneren Entriegelungswand (10) gegenüber der Öffnung (6) angeordnet ist, so daß der Austritt des Verriegelungsorgans (7) aus der Aufnahme (5) bei Drehung der Eingangswelle (2) gegenüber der Ausgangswelle (3) möglich wird.

6. System nach Anspruch 5, **dadurch gekennzeichnet, daß** das Verriegelungsorgan (7) aus einer Kugel besteht, wobei die besagte Kugel durch Drehung der Eingangswelle (2) aus der Aufnahme (5) austreten kann, wenn der Steuerring (8) in entriegelter Position ist.

7. System nach Anspruch 5 oder 6, **dadurch gekennzeichnet, daß** der Steuerring (8) eine Neigung (13) umfaßt, die den Abschnitt der inneren Verriegelungswand (9) mit dem Abschnitt der inneren Entriegelungswand (10) verbindet, wobei die besagte Neigung so gestaltet ist, daß das Verriegelungsorgan (7) in seine verriegelte Position zurückgeführt wird, wenn der Steuerring (8) aus seiner Entriegelungsposition in seine Verriegelungsposition übergeht.

8. System nach einem beliebigen der vorstehenden Ansprüche 5 bis 7, **dadurch gekennzeichnet, daß** zwischen einer auf der Ausgangswelle (3) vorgesehenen radialen Anschlagfläche (15) und dem Steuerring (8) eine Feder (16) angeordnet ist, wobei die Feder (16) komprimiert wird, wenn der Steuerring (8) in Entriegelungsposition ist.

9. System nach einem beliebigen der vorstehenden Ansprüche 1 bis 8, **dadurch gekennzeichnet, daß** die Mittel für die Kopie ein Potentiometer umfassen.

10. Luftfahrzeug, **dadurch gekennzeichnet, daß** es mindestens ein Verbindungssystem (1) nach einem beliebigen der vorstehenden Ansprüche 1 bis 9 umfaßt, das mit mindestens einem Sitz des besagten Luftfahrzeugs verbunden ist.
